# EUROPEAN PATENT SPECIFICATION

(11) **EP 3 102 623 B1**
(45) Date of publication and mention of the grant of the patent: **25.03.2020**
(21) Application number: 15705544.3
(22) Date of filing: 06.02.2015
(51) Int. Cl.: C08G 59/50, C08J 5/24

(54) **CURING AGENTS FOR EPOXY RESINS**
HÄRTUNGSMITTEL FÜR EPOXIDHARZE
NOUVEAUX DURCISSEURS POUR RÉSINES ÉPOXY

(30) Priority: 06.02.2014 GB 201402052; 06.02.2014 GB 201402056
(43) Date of publication of application: 14.12.2016
(73) Proprietor: Hexcel Composites Limited, Duxford, Cambridgeshire CB22 4QB (GB)
(72) Inventor: MASON, Chris, Duxford Cambridgeshire CB22 4QD (GB); SIMMONS, Martin, Duxford Cambridgeshire CB22 4QD (GB)
(74) Representative: Eddowes, Simon
(86) International application number: PCT/EP2015/052539
(87) International publication number: WO 2015/118121

(56) References cited:
- NL-A- 7 311 283
- EICHLER, JOSEF; MLEZIVA, JOSEF: "Reactivity of aromatic diamines with epoxide resins", ANGEWANDTE MAKROMOLEKULARE CHEMIE, 22 September 1970 (1970-09-22), pages 31-55, XP008176377, ISSN: 0003-3146
- KORSHAK, V. V.; VINOGRADOVA, S. V.; SOLOV'EVA, L. K.; DOKHTURISHVILI, N.S.;PAPAVA, G.SH.; TSISKARISHVILI, P. D.; MAKINA, L.B.: "Glass fiber-reinforced plastics and adhesives produced from epoxypolymers of polycyclic bisphenols", PLASTICHESKIE MASSY, vol. 3, 19 July 1975 (1975-07-19), pages 74-75, XP009176367, ISSN: 0554-2901

## Description

The present invention relates to curatives for epoxy resins, their use in curing epoxy resins and in epoxy resins containing the curatives. Epoxy resins find widespread use as thermosetting resins in many applications. They are employed as the thermosetting matrix in prepregs consisting of fibres embedded in the thermosetting matrix. They may also be employed in coatings or in reinforcing foams all of which find applications in a wide variety of industries such as the aerospace, automotive, electronics, construction, furniture, green energy and sporting goods industries.

A wide range of epoxy resins are readily available and are available according to their reactivity as required for particular applications. For example, the resins may be solid, liquid or semi solid and may have varying reactivity according to the use to which they are to be put. The reactivity of an epoxy resin is often measured in terms of it's epoxy equivalent weight which is the molecular weight of the resin that contains a single reactive epoxy group. The lower the epoxy equivalent weight the more reactive the epoxy resin.

Different reactivities are required for different uses of epoxy resins but the typical use of an epoxy resin whether it be as the matrix of a fibre reinforced prepreg, an adhesive coating, a structural adhesive is that it is cured by heating. The curing reaction of an epoxy resin is usually an exothermic reaction which needs to be controlled to prevent overheating of the resin perhaps damaging the resin itself, or substrates with which it is used or the moulds in which it may be cured. There is therefore a need to control and preferably reduce the enthalpy of the curing reaction of epoxy resins.

Curing agents are used in order to activate and control the curing of epoxy resins to provide the required cure cycle, the exotherm of the cure and the properties of the final cured resin. A wide range of curing agents for epoxy resins have been proposed and are widely used. For example, amines such as dicyandiamide is a widely used curing agent as are sulfones such as diamino diphenyl sulfone.

One particular class of curing agents are substituted 4,4¹ methylene bis anilines such as those that are described in US Patents 4,950,792, 4,978,791; European Application Publication Number 2426157 and PCT Publication WO 2002/028323 which describe the nomenclature used to describe the structure of methylene bis anilines.

Epoxy resins are usually employed in formulations containing other additives according to the nature of the use envisaged for the cured epoxy resin. Additives including toughening agents, rubbers, core shell polymers, fillers, optionally blowing agents and the like can be included in the formulations. In order to prepare the epoxy resin formulation it is necessary to produce a homogenous or substantially homogeneous mixture of the various ingredients. In particular it is important that the curing agent be well dispersed throughout the epoxy resin in order to obtain uniform curing of the formulation upon heating so that uniform properties, particularly mechanical properties, are obtained in the cured epoxy resin. Additionally, it is desirable that the formulations can be prepared at temperatures well below the activation temperature of the curing agent to prevent premature activation of the curing agent and cross linking of the epoxy resin. In addition for infusion applications the viscosity of the formulation suitably remains low to promote impregnation of fibrous reinforcement. It is also preferred that from an economic perspective the formulations can be prepared at low temperatures such to reduce the costs of heating the mixtures during compounding of the formulation. This is particularly relevant in resin infusion processes, known to those skilled in the art. The uncured resin composition comprising the epoxy resin, curative and optionally other components is suitably drawn into the reinforcing material, for example fibres or a fabric, located in a mould for the composite using a vacuum and/or pressure to draw the resin composition through a stack of the reinforcing material. The speed and distance of the infusion of the stack is dependent on the permeability of the stack, the pressure gradient acting on the infused resin and the viscosity of the resin composition.

Articles comprising fibre reinforced epoxy resins are typically a fibrous material embedded in a matrix of cured epoxy resin. The articles are usually prepared by shaping the fibrous material and the uncured epoxy resin in a mould and then curing the epoxy resin by heating. There are two main processes that can be used, a process employing that is known as a prepreg in which the fibrous material is first impregnated with the uncured epoxy resin to produce the prepreg, and one or more layers of the prepreg are then placed in a mould and moulded to the desired shape within the mould and the system then cured. The second process is known as an infusion process where one or more layers of a resin free fibrous material is placed in a mould and infused or injected with the epoxy resin within the mould before or after shaping and the system then cured.

Both processes have advantages and disadvantages and the selection of the process to be used depends upon the article to be produced. There are also different requirements for the epoxy resin systems that are used in prepregs and for infusion.

Suitably an infusion resin has a low viscosity at the injection temperatures to allow infusion of a dry fibre reinforcement preform (typically in the range of from 80 to 130°C for aerospace grade resins). In contrast, a prepreg resin should have a higher viscosity at these temperatures to ensure that the preimpregnated fibre reinforcement remains impregnated during storage, transport, handling and lay-up of the prepreg.

Additionally, a prepreg cure schedule typically includes an initial low temperature phase (above room temperature but below curing temperature) to allow the resin to reduce in viscosity so that it will flow to consolidate the preform lay-up. The temperature is then increased to cure the resin.

In an infusion process, following infusion of the preform at the injection temperature, the temperature of the infusion resin is increased to the cure temperature to cure the resin.

Furthermore, an infusion resin is generally prepared where it is used in the moulding process by mixing resins and curatives shortly before it is infused into the fibrous material which may already be formed or may subsequently be formed. The resin is then cured. Infusion must be completed within 1 to 3 hours otherwise the resin will have pre-reacted and the viscosity of the resin will have increased preventing effective infusion of the fibrous material. Infusion resins are generally reactive and is not possible to store the infusion resin for any length of time because it will react and cure. On the other hand, a prepreg resin is designed to remain stable and have a very low rate of cure at low temperatures (typically 40°C or less) for a long period of time, typically 3 weeks up to 6 months to allow for storage and transportation of the prepreg.

There are also hybrid forms of infusion and prepreg technology. In the hybrids the resin is in the form of a highly viscous resin film which is located within a lay-up of dry fibrous reinforcement. Again the temperature is first raised to an initial temperature to reduce the viscosity of the resin film which allows it to flow and impregnate the reinforcement. The resin temperature is then further increased to cure the resin.

The choice of the curative used for curing the epoxy resin will depend upon which process is to be used to produce and process the fibre, uncured epoxy resin system and on the required cure cycle. For example, when the epoxy resin system is to be used in the infusion process the curing agent should not undesirably increase the viscosity of the liquid epoxy resin used for infusion as this could make infusion more difficult requiring greater energy to accomplish infusion and/or leading to unhomogeneous distribution of the liquid epoxy resin throughout the fibrous structure. Since prepregs are often produced in one location and used in another and may be transported and stored between production and use the curing agent used for the epoxy resin system of a prepreg should not therefore be active at low temperatures to cause premature curing of the resin and should have a long outlife at room temperature (storage time without undesirable pre-reaction). Liquid curing agents may be used in infusion systems and solid curing agents are often used in prepregs.

The requirements of a curing agent for epoxy resins are that it is soluble in the epoxy resins with which it is used at temperatures involved during the cure cycle and that it is easily mixed with the epoxy resin to provide a uniform dispersion of the curing agent throughout the resin. Additionally the curing agent should be activated to provide the desired time/temperature cure cycle for the fibre/epoxy resin system, particularly to provide fast cure but with a low enthalpy of the curing reaction. Furthermore the curing agent should be compatible with other additives such as tougheners that may be included in the system.

KORSHAK, V. V.; VINOGRADOVA, S. V.; SOLOV'EVA, L. K.; DOKHTURISHVILI, N.S.;PAPAVA, G.SH.; TSISKARISHVILI, P. D.; MAKINA, L.B., "Glass fiber-reinforced plastics and adhesives produced from epoxypolymers of polycyclic bisphenols", PLASTICHESKIE MASSY, (19750719), vol. 3, ISSN 0554-2901, pages 74 - 75, discloses glass-reinforced plastics prepared from epoxy resins based on polycyclic bisphenols and 4,4'-diamino-3-3'-dimethoxydiphenylmethane as a curing agent.

There is therefore a continuing need to improve fibre reinforced epoxy resins articles and to find new curing agents that can be used to improve the manufacture and properties of such articles. Examples of properties that we seek to improve are moisture resistance, retention of Tg of the cured resin when subject to heat and/or moisture, improved compression and toughenability. As with many systems it is necessary to obtain the optimum balance of properties and the suitability of the curing agent is governed not only by the manufacturing process to be used but the properties required of the finished cured article.

The present invention aims to solve the above described problems and/or to provide improvements generally.

According to the invention, there is provided a use, an article and a process as defined in any one of the accompanying claims.

The present invention provides a curing agent for the epoxy resin that can be readily formulated and which retains a stable viscosity over time thereby providing a composition which is especially useful in an infusion process. The composition may be readily formulated prior to infusion of a moulding in an infusion process.

The present invention therefore provides the use of a methylene bis aniline compound as a curing agent for an epoxy resin wherein the methylene bis aniline compound is a liquid at 20°C and is selected from 4,5'-methylene (2-methoxy aniline) and 5,5'-methylene (2-methoxy aniline).

The invention further provides an article comprising an epoxy resin cured with a methylene bis aniline compound which is a liquid at 20°C and is selected from 4,5'-methylene (2-methoxy aniline) and 5,5'-methylene (2-methoxy aniline).

The liquid methylene bis aniline comprises two aniline moieties which are linked by a methylene group and they may be linked independently at the meta or para position to provide a 4,5' methylene bis aniline or a 5, 5' methylene bis aniline.

The liquid methylene bis aniline can be readily formulated with epoxy resins and also with the other traditional ingredients that are used in epoxy resin formulations. In a two component infusion process, the liquid bis-aniline compound advantageously may be processed more readily than a solid amine. A solid amine typically needs to be melted before injection and the processing equipment for the infusion may need to be heated throughout to reduce or prevent any recrystallization of the amine in the equipment. Furthermore, a solid or crystalline amine will require heating to melt the amine adding a further step which may be costly and time-consuming. The liquid bis-aniline compound suitably requires no heating or only moderate heating in order to be processable in an infusion process.

The liquid methylene bis anilines compounds having at least one alkoxy substituent disclosed herein may be obtained by appropriate selection of the substituent groups on the aromatic rings of the compound, and they may be asymmetric methylene bis anilines by which is meant compounds containing different substituents on each of the aromatic rings and which may be symmetrical or asymmetrical. The liquids may also be mixtures of two or more methylene bis anilines. By a liquid methylene bis aniline is meant one that remains a liquid at 20°C without crystallisation for at least 30 days.

We have found that by including at least one alkoxy substituent group on the aniline molecules liquid materials that are particularly useful as curing agents for epoxy resins can be obtained.

Although M-MeOA is generally reported to be a solid at room temperature with a melting point of 95-100°C, surprisingly, we have found that the product obtained was liquid at room temperature (T= 21 °C) and has remained liquid with no noticeable crystallisation at room temperature for 28 days. Thin layer chromatography of the liquid showed multiple products present.

Liquid methylene bis anilines selected from 4,5'-methylene (2-methoxy aniline) and 5,5'-methylene (2-methoxy aniline) are suitably used as curatives for any epoxy resin. In preferred formulations the epoxy resin has a functionality at least 2 and has a high reactivity. The epoxy equivalent weight (EEW) of the resin is preferably in the range from 80 to 1500, preferably of from 80 to 500. Suitable epoxy resins may comprise blends of two or more epoxy resins selected from monofunctional, difunctional, trifunctional and/or tetrafunctional epoxy resins. The liquid methylene bis anilines are particularly useful with epoxy resins that are liquid at ambient temperature.

Difunctional epoxy resins with which the liquid methylene bis anilines may be used include those based on: diglycidyl ether of bisphenol F, diglycidyl ether of bisphenol A (optionally brominated), phenol and cresol epoxy novolacs, glycidyl ethers of phenol-aldehyde adducts, glycidyl ethers of aliphatic diols, diglycidyl ether, diethylene glycol digicidyl ether, aromatic epoxy resins, aliphatic polyglycidyl ethers, epoxidised olefins, brominated resins, aromatic glycidyl amines, heterocyclic glycidyl imidines and amides, glycidyl ethers, fluorinated epoxy resins, glycidyl esters or any combination thereof.

Difunctional epoxy resins may be selected from diglycidyl ether of bisphenol F, diglycidyl ether of bisphenol A, diglycidyl dihydroxy naphthalene, or any combination thereof.

Trifunctional epoxy resins with which the liquid methylene bis anilines may be used include those based upon phenol and cresol epoxy novolacs, glycidyl ethers of phenol-aldehyde adducts, aromatic epoxy resins, aliphatic triglycidyl ethers, dialphatic triglycidyl ethers, aliphatic polyglycidyl amines, heterocyclic glycidyl imidines and amides, glycidyl ethers, fluorinated epoxy resins, or any combination thereof. Suitable trifunctional epoxy resins are available from Huntsman Advanced Material (Monthey, Switzerland) under the tradenames MY0500 and MY0510 (triglycidyl para-aminophenol) and MY0600 and MY0610 (triglycidul meta-aminophenol). Atriglycidyl meta-aminophenol is also available from Sumitomo Chemical Co. (Osaka, Japan) under the tradename ELM-120.

Tetrafunctional epoxy resins with which the liquid methylene bis anilines may be used include N,N,N,¹,N¹-tetraglycidyl-m-xylenediamine (available commercially from Mitsubishi Gas Chemical Company under the name Tetrad-X, and as Erisys GA-240 from CVC Chemicals), and N,N,N¹,N¹-tetraglycidylmethylenedianline (e.g. MY720 and MY721 from Huntsman Advanced Materials). Other suitable multifunctional epoxy resins include DEN438 (from Dow Chemicals, Midland, MI) DEN439 (from Dow Chemicals), Araldite ECN 1273 (from Huntsman Advanced Materials), and Araldite ECN 1299 (from Huntsman Advanced Materials).

The liquid methylene bis anilines selected from 4,5'-methylene (2-methoxy aniline) and 5,5'-methylene (2-methoxy aniline) may be to cure epoxy resin formulations also including a thermoplastic component that is soluble in the epoxy resin and acts as a toughening agent. Any suitable soluble thermoplastic polymer that has been used as toughening agent may be used. Typically, the thermoplastic polymer is added to the resin mix as particles that are dissolved in the resin mixture by heating prior to addition of any insoluble particles and the curing agent. Once the thermoplastic agent is substantially dissolved in the hot matrix resin precursor (i.e. the blend of epoxy resins), the precursor is cooled and the remaining ingredients (curing agent and insoluble particles) are added.

Exemplary thermoplastics that can be used as the soluble thermoplastic component include any polyethersulfone, polyetherimide and polysulphone which are soluble in the epoxy resin.

Polyethersulfone (PES) is preferred for use as the soluble thermoplastic component. PES is sold under the trade name Sumikaexcel 5003P, which is commercially available from Sumitomo Chemicals. Alternatives to 5003P are Solvay polyethersulphone 105RP, or the non-hydroxyl terminated grades such as Solvay 1054P. It is preferred that the uncured resin formulation include from 10 to 20 weight percent of the thermoplastic component. More preferred are uncured resin formulation that contain from 12 to 18 wt % soluble thermoplastic component. Most preferred are resin formulation that contain from 13 to 15 wt % soluble thermoplastic component. Other additives may be present in the resin; the additives may have a small particle of less than 1 micron, preferably less than 0.5 micron so as not too increase the viscosity of the resin significantly. Examples of suitable additive particles are nanocore shell rubbers and nano silica particles.

The uncured resin formulation may also include at least one other curing agent in addition to the methylene bis anilines. Suitable additional curing agents are those which facilitate the curing of the epoxy-functional compounds and, particularly, facilitate the ring opening polymerization of such epoxy compounds.

Suitable additional curing agents include anhydrides, particularly polycarboxylic anhydrides, such as nadic anhydride (NA), methylnadic anhydride (MNA - available from Aldrich), phthalic anhydride, tetrahydrophthalic anhydride, hexahydrophthalic anhydride (HHPA-available from Anhydrides and Chemicals Inc., Newark, N.J.), methyltetrahydrophthalic anhydride (MTHPA-available from Anhydrides and Chemicals Inc.), methylhexahydrophthalic anhydride (MHHPA -available from Anhydrides and Chemicals Inc.), endomethylenetetrahydrophthalic anhydride, hexachloroendomethylene-tetrahydrophthalic anhydride (Chlorentic Anhydride - available from Velsicol Chemical Corporation, Rosemont), trimellitic anhydride, pyromellitic dianhydride, maleic anhydride (MA - available from Aldrich), succinic anhydride (SA), nonenylsuccinic anhydride, dodecenylsuccinic anhydride (DDSA - available from Anhydrides and Chemicals Inc.), polysebacic polyanhydride, and polyazelaic polyanhydride.

Further suitable additional curing agents include the amines, including other aromatic amines, e.g., 1,3-diaminobenzene, 1,4-diaminobenzene, 4,4'-diamino-diphenylmethane, and the polyaminosulphones, such as 4,4'-diaminodiphenyl sulphone (4,4'-DDS - available from Huntsman), 4-aminophenyl sulphone, and 3,3'- diaminodiphenyl sulphone (3,3'-DDS). Other suitable additional curing agents include 4,4'-methylene bis chlorodiethylaniline (MCDEA), 4,4'-methylene bis diethylaniline (MDEA) and 4,4'-methylene bis methyl isopropyl aniline which are especially useful in resin transfer moulding (RTM). Suitable additional curing agents may also include polyols, such as ethylene glycol (EG -available from Aldrich), poly(propylene glycol), and polyvinyl alcohol); and the phenol-formaldehyde resins, such as the phenol-formaldehyde resin having an average molecular weight of about 550-650, the p-t-butylphenol-formaldehyde resin having an average molecular weight of about 600-700, and the p-n-octylphenol-formaldehyde resin, having an average molecular weight of about 1200-1400, these being available as HRJ 2210, HRJ-2255, and SP-1068, respectively, from Schenectady Chemicals, Inc., Schenectady, N.Y.). Further as to phenol-formaldehyde resins, a combination of CTU guanamine, and phenol-formaldehyde resin having a molecular weight of 398, which is commercially available as CG-125 from Ajinomoto USA Inc. (Teaneck, N.J.), is also suitable.

The uncured formulation resin may also include additional ingredients, such as performance enhancing or modifying agents and additional thermoplastic polymers provided they do not adversely affect the tack and outlife of the formulation or the strength and damage tolerance of cured composite parts obtained from the formulation. The performance enhancing or modifying agents, for example, may be selected from flexibilizers, toughening agents/particles, accelerators, core shell rubbers, flame retardants, wetting agents, pigments/dyes, UV absorbers, anti-fungal compounds, fillers, conducting particles, and viscosity modifiers.

Suitable curing agent accelerators are any of the urone compounds that have been commonly used. Specific examples of accelerators, which may be used alone or in combination, include N,N-dimethyl, N'-3,4-dichlorphenyl urea (Diuron), N'-3-chlorophenyl urea (Monuron), and preferably N,N-(4-methyl-m-phenylene bis[N',N'-dimethylurea] (e.g. Dyhard UR500 available from Degussa).

Uncured resin formulations that can be cured by the use of the present invention may be used in a wide variety of situations where a cured epoxy resin is desired. Although the uncured epoxy resin compositions may be used alone, the formulations disclosed herein are generally combined with a fibrous support to form composite materials. The composite materials may be in the form of a prepreg, partially cured prepreg or a completely cured final part. Prepreg is the term used to describe fibre reinforced materials embedded in a matrix of uncured epoxy resin. The fibrous reinforcement may be carbon fibre, glass fibre or aramid and may be continuous, woven or unwoven or short fibre. The term "uncured", when used herein in connection with prepreg, formulation resin or composite material, is intended to covers items that may have been subjected to some curing, but which have not been completely cured to form the final composite part or structure.

The liquid methylene bis aniline compound employed in the use of the present invention is especially suitable for the production of a composite by an infusion process. The liquid aniline enables the uncured resin composition to retain a suitable viscosity whereby it may be drawn into a mould to form a resin or a composite. In an infusion process, the reinforcing material, for example a fabric or a fibrous material, is first placed in the mould and the liquid resin is drawn into the mould perhaps under pressure or by vacuum to encase the reinforcing material within the mould. Suitably the uncured resin drawn into the mould comprises the epoxy resin, liquid methylene bis aniline compound and optionally other components The reinforcing material may have been pre-shaped in the mould or maybe shaped once impregnated with the resin and the resin impregnated reinforcing material may then be cured in the mould.

The speed and distance of the infusion of the reinforcing material is dependent on its permeability, the pressure gradient acting on the infused resin and the viscosity of the resin composition. Suitably the resin is drawn through the reinforcing material at a temperature of 80 to 130 °C. Once the resin has been drawn through the reinforcing material, the temperature is suitably raised to around 150 to 190 °C to cure the resin.

As the methylene bis aniline compound for use in the present invention is liquid at room temperature, the compound and epoxy resin suitably provide a low viscosity composition which is infusable. The composition may readily be drawn through the reinforcing material at a temperature of 80-130 °C to provide a composite with excellent mechanical properties. The liquid infusion process advantageously allows composites to be formed with reduced manufacturing costs due to the material being cured in an out of autoclave process.

Advantageously, the resin composition has a viscosity of less than 100 cPoise preferably 60 to 80 cPoise at a temperature of 110 °C.

Improved homogeneity of the cured resin provides a high quality and consistent composite product enabling the composite to be employed in applications where it will be subjected to high stresses for example in space, aeronautical and turbine applications.

Such composite materials may be used for any intended purpose, they are preferably used in automotive and aerospace vehicles and particularly preferred for use in commercial and military aircraft. For example, the composite materials may be used to make non-primary (secondary) aircraft structures. However the preferred use of the composite material is for structural applications, such as primary aircraft structures. Primary aircraft structures or parts are those elements of either fixed-wing or rotary wing aircraft that undergo significant stress during flight and which are essential for the aircraft to maintain controlled flight. The composite materials may also be used for other structural applications to make load-bearing parts and structures in general, for example they may be used in wind turbine blades and sporting goods such as skis.

Where the liquid methylene bis anilines for use in this invention are used as curing agents in pre-impregnated composite material, the materials are composed of reinforcing fibres and the uncured resin formulation as a matrix to contain the fibres. The reinforcing fibres can be any of the conventional fibre configurations that are used in the prepreg industry. The matrix includes an epoxy resin component which may include difunctional epoxy resins, but preferably includes a combination of trifunctional and tetrafunctional aromatic epoxy resins.

The uncured resin and liquid amine can be mixed together prior to injection at 60-80 °C which would be suitable for a one-component injection process or the uncured epoxy and liquid amine are pre-heated before injecting via a two-component process. The reinforcing fibres used in the composites or prepregs disclosed herein may be synthetic or natural fibres or any other form of material or combination of materials that, combined with the resin composition, forms a composite product. The reinforcement web can either be provided via spools of fibre that are unwound or from a roll of textile. Exemplary fibres include glass, carbon, graphite, boron, ceramic and aramid. Preferred fibres are carbon and glass fibres particularly carbon fibres. Hybrid or mixed fibre systems may also be envisaged. The use of cracked (i.e. stretch-broken) or selectively discontinuous fibres may be advantageous to facilitate lay-up of the product and improve its capability of being shaped. Although a unidirectional fibre alignment is preferable, other forms may also be used. Typical textile forms include simple textile fabrics, knit fabrics, twill fabrics and satin weaves. It is also possible to envisage using non-woven or non-crimped fibre layers. The surface mass of fibres within the fibrous reinforcement is generally 80-4000 g/m², preferably 100-2500 g/m², and especially preferably 150-2000 g/m². The number of carbon filaments per tow can vary from 3000 to 320,000, again preferably from 6,000 to 160,000 and most preferably from 12,000 to 48,000. For fibreglass reinforcements, fibres of 600-2400 tex are particularly adapted.

Exemplary layers of unidirectional fibrous tows are made from HexTow® carbon fibres, which are available from Hexcel Corporation. Suitable HexTow® carbon fibres for use in making unidirectional fibre tows include: IM7 carbon fibres, which are available as tows that contain 6,000 or 12,000 filaments and weight 0,223 g/m and 0.446 g/m respectively; IM8-IM10 carbon fibres, which are available as tows that contain 12,000 filaments and weigh from 0.446 g/m to 0.324 g/m; and AS7 carbon fibres, which are available in tows that contain 12,000 filaments and weigh 0.800 g/m, tows containing up to 80,000 or 50,000 (50K) filaments may be used such as those containing about 25,000 filaments available from Toray and those containing about 50,000 filaments available from Zoltek. The tows typically have a width of from 3 to 7 mm and are fed for impregnation on equipment employing combs to hold the tows and keep them parallel and unidirectional.

The present invention is illustrated but in no way limited by reference to the following Examples in which the methylene bis anilines previously described were employed as curing agents with the epoxy resin MY721 (EEW 113, obtained from Huntsman Advanced Materials), and with the bisphenol-F epoxy resin LY 3581 (EEW 160 to 170, obtained from Huntsman Advanced Materials).

### Supporting Examples

33.5 g of MY721 was mixed with 20.5g of M-MeOA at 40 °C. The mixtures were then cured at 130 °C for one hour followed by 180 °C for two hours. Dynamic scanning calorimetry (DSC) was performed using a TA Q100 instrument to determine onset temperatures, enthalpy and residual cure using a heating rate of 10 °C/min. Dynamic mechanical analysis (DMA) was performed using a Q800 instrument on cured resin to determine glass transition temperatures at a heating rate of 5 °C/min and at a frequency of 1 Hz. Hot/wet resistance was determined of the neat resin by immersing cured DMA specimens in a water bath for two weeks at 70 °C. Water uptake and Tg were then determined. Compression modulus was performed using an Instron mechanical test machine on neat resin cylinders (6 cm long 1-1.5 cm in diameter) that were machined to parallel ends.

In a similar way to the preparation and processing of the MY 721 mixture, mixtures were prepared with 33.5. g of LY3581 and 20.5g of M-MeOA. A mixture was prepared from 20.5 g of M-MeOA in combination with a blend of methylene bisanilines as described in WO 2011/107796 referenced herein as "blend". Finally, a mixture referenced herein as "Y" was prepared from 28 g of MY721 resin in combination with a blend of curatives consisting of 6 g of M-MIPA and 13 g of M-DEA. All formulations were prepared at 40 °C. These mixtures were all processed in the same way as outlined above with respect to the MY 721 based mixture.

The results are shown in Table 1

**Table 1**

| **Epoxy with M-MeOA** | **Onset of cure (°C)** | **Enthalpy (J/g)** | **E'Tg (°C)** | **Wet Tg (°C)** | **Water uptake (%)** | **Modulus (GPa)** |
|---|---|---|---|---|---|---|
| MY721 | 161 | 335 | 208 | 103 | 2.40 | 4.7 |
| LY3581 | 126 | 420 | 118 | | | |
| *Blend | 202 | 432 | 207 | 180 | | 3.7 |
| **Y | 211 | 411 | 208 | 169 | 2.60 | 3.3 |

| | | | | | | |
|---|---|---|---|---|---|---|
| *This blend is not within the scope of this invention. It is a blend of methylene bisanilines as described in WO2011/107796 ***Y is not within the scope of this invention. It is a mixture of MY721 resin (28g) with a blend of curatives M-MIPA (6g) and M-DEA (13g) | | | | | | |

The mixture cured well with both epoxies giving a T_{g} with MY721 the same as Y and similar to the hybrids. The compression modulus of the resin using the M-MeOH curing agent is beneficially higher than that of both the Blend and Y.

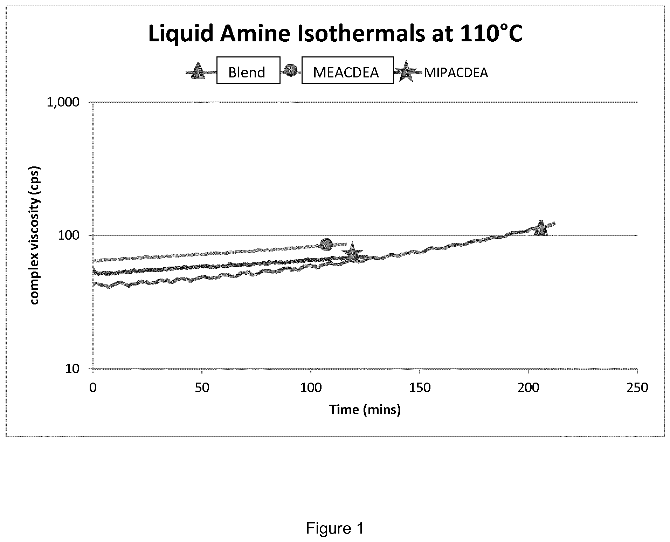

## Claims

1. The use of a methylene bis aniline compound as a curing agent for epoxy resins, the methylene bis aniline compound being a liquid at 20°C and being selected from 4,5'-methylene (2-methoxy aniline) and 5,5'-methylene (2-methoxy aniline).

2. The use according to Claim 1 in which the epoxy resin has a functionality of at least 2; and/or in which the epoxy equivalent weight (EEW) of the resin is in the range from 80 to 500.

3. The use according to Claim 1 or Claim 2 wherein the epoxy resin includes a thermoplastic component that is soluble in the epoxy resin and acts as a toughening agent.

4. The use according to any preceding Claim in which the epoxy resin is used as the matrix of a prepreg comprising a reinforcement, preferably wherein the reinforcement in the prepreg comprises carbon fibre, glass fibre or aramid and may be continuous, woven or unwoven or short fibre.

5. An article comprising an epoxy resin cured with a methylene bis aniline compound, the methylene bis aniline compound being a liquid at 20°C and being elected from 4,5'-methylene (2-methoxy aniline) and 5,5'-methylene (2-methoxy aniline).

6. A process for producing a composite comprising an epoxy resin and a reinforcing material comprising providing a reinforcing material, infusing the reinforcing material with an uncured, flowable epoxy resin composition comprising an epoxy resin and a curing agent comprising a liquid methylene bis aniline compound, drawing the uncured epoxy resin through the reinforcing material located in a mould at a temperature of 80 to 130 °C and raising the temperature to 150 to 190 °C to cure the resin, the methylene bis aniline compound being a liquid at 20°C and being selected from 4,5'-methylene (2-methoxy aniline) and 5,5'-methylene (2-methoxy aniline).

## Patentansprüche

1. Verwendung einer Methylenbisanilin-Verbindung als Härtungsmittel für Epoxidharze, wobei die Methylenbisanilin-Verbindung bei 20 °C flüssig ist und aus 4,5'-Methylen(2-methoxyanilin) und 5,5'-Methylen(2-methoxyanilin) ausgewählt ist.

2. Verwendung nach Anspruch 1, wobei das Epoxidharz eine Funktionalität von mindestens 2 aufweist und/oder wobei das Epoxidäquivalentgewicht (EEW) des Harzes im Bereich von 80 bis 500 liegt.

3. Verwendung nach Anspruch 1 oder Anspruch 2, wobei das Epoxidharz eine thermoplastische Komponente enthält, die in dem Epoxidharz löslich ist und als Zähigkeitsvermittler wirkt.

4. Verwendung nach einem der vorhergehenden Ansprüche, wobei das Epoxidharz als Matrix eines Prepreg, das eine Verstärkung umfasst, verwendet wird, vorzugsweise wobei die Verstärkung in dem Prepreg Kohlefaser, Glasfaser oder Aramid umfasst und Endlosfaser, Webfaser, Vliesfaser oder Kurzfaser sein kann.

5. Gegenstand, umfassend ein mit einer Methylenbisanilin-Verbindung gehärtetes Epoxidharz, wobei die Methylenbisanilin-Verbindung bei 20 °C flüssig ist und aus 4,5'-Methylen(2-methoxyanilin) und 5,5'-Methylen(2-methoxyanilin) ausgewählt ist.

6. Verfahren zur Herstellung eines Verbunds, der ein Epoxidharz und ein Verstärkungsmaterial umfasst, bei dem man ein Verstärkungsmaterial bereitstellt, das Verstärkungsmaterial mit einer ungehärteten, fließfähigen Epoxidharzzusammensetzung, die ein Epoxidharz und ein Härtungsmittel, das eine flüssige Methylenbisanilin-Verbindung umfasst, umfasst, infundiert, das ungehärtete Epoxidharz bei einer Temperatur von 80 bis 130 °C durch das sich in einer Form befindende Verstärkungsmaterial zieht und die Temperatur zur Härtung des Harzes auf 150 bis 190 °C erhöht, wobei die Methylenbisanilin-Verbindung bei 20 °C flüssig ist und aus 4,5'-Methylen(2-methoxyanilin) und 5,5'-Methylen-(2-methoxyanilin) ausgewählt ist.

## Revendications

1. Utilisation d'une méthylène bis-aniline en tant qu'agent durcisseur pour des résines époxy, la méthylène bis-aniline étant un liquide à 20 °C et étant choisie parmi la 4,5'-méthylène (2-méthoxyaniline) et la 5,5'-méthylène (2-méthoxyaniline).

2. Utilisation selon la revendication 1 dans laquelle la résine époxy présente une fonctionnalité d'au moins 2 ; et/ou dans laquelle la masse d'époxy équivalente (EEW) de la résine est comprise dans l'intervalle allant de 80 à 500.

3. Utilisation selon la revendication 1 ou la revendication 2, dans laquelle la résine époxy inclut un composant thermoplastique qui est soluble dans la résine époxy et agit comme agent de renforcement.

4. Utilisation selon l'une quelconque des revendications précédentes dans laquelle la résine époxy est utilisée en tant que matrice d'un pré-imprégné comprenant un renfort, préférentiellement dans laquelle le renfort du pré-imprégné comprend une fibre de carbone, une fibre de verre ou de l'aramide et peut être une fibre continue, tissée ou intissée ou courte.

5. Article comprenant une résine époxy durcie avec une méthylène bis-aniline, la méthylène bis-aniline étant un liquide à 20 °C et étant choisie parmi la 4,5'-méthylène (2-méthoxyaniline) et la 5,5'-méthylène (2-méthoxyaniline).

6. Procédé de production d'un composite comprenant une résine époxy et un matériau de renfort comprenant le fait de se munir d'un matériau de renfort, l'infusion du matériau de renfort avec une composition de résine époxy non durcie fluide comprenant une résine époxy et un agent durcisseur comprenant une méthylène bis-aniline liquide, l'étirement de la résine époxy non durcie à travers le matériau de renfort situé dans un moule à une température de 80 à 130 °C et l'augmentation de la température entre 150 et 190 °C pour durcir la résine, la méthylène bis-aniline étant un liquide à 20 °C et étant choisie parmi la 4,5'-méthylène (2-méthoxyaniline) et la 5,5'-méthylène (2-méthoxyaniline).
